# EUROPÄISCHE PATENTSCHRIFT

(11) **EP 3 080 382 B1**
(45) Veröffentlichungstag und Bekanntmachung des Hinweises auf die Patenterteilung: **27.12.2017**
(21) Anmeldenummer: 14820742.6
(22) Anmeldetag: 03.12.2014
(51) Int. Cl.: E21B 17/03

(54) **VERRIEGELUNGSVORRICHTUNG UND -VERFAHREN FÜR DIE WERKZEUGAUFNAHME EINER DREHBOHRANLAGE**
LOCKING DEVICE AND LOCKING METHOD FOR THE TOOL HOLDER OF A DRILLING SYSTEM
DISPOSITIF ET PROCÉDÉ DE VERROUILLAGE POUR PORTE-OUTIL D'UNE INSTALLATION DE FORAGE ROTATIF

(30) Priorität: 09.12.2013 DE 102013020761
(43) Veröffentlichungstag der Anmeldung: 19.10.2016
(73) Patentinhaber: Stahl- und Apparatebau Hans Leffer GmbH & Co. KG, 66125 Saarbrücken (DE)
(72) Erfinder: LEFFER, Michael, 66440 Blieskastel (DE); SCHMITT, Ewald, F-57720 Epping (FR)
(74) Vertreter: Flaccus, Rolf-Dieter
(86) Internationale Anmeldenummer: PCT/EP2014/003212
(87) Internationale Veröffentlichungsnummer: WO 2015/086126

(56) Entgegenhaltungen:
- EP-A2- 1 624 151
- DE-A1-102011 108 999
- DE-U1- 20 301 137
- DE-U1- 29 508 441

## Beschreibung

Die Erfindung betrifft eine Verriegelungsvorrichtung und ein Verriegelungsverfahren für die Verriegelung eines Werkzeuges mit der Werkzeugaufnahme einer Drehbohranlage.

Drehbohranlagen werden vor allem zum Abteufen von Bohrungen, insbesondere zur Herstellung von verrohrten Bohrungen, im Tiefbau oder bei der Suche nach Bodenschätzen verwendet. Beim Abteufen von Bohrungen sind bei vielen Untergründen und vielen Bohrverfahren (z.B. bei Dreh- oder Rüttelbohrverfahren) die Bohrwerkzeuge häufig auszuwechseln. Bei gängigen Drehbohranlagen befindet sich die Werkzeugaufnahme unmittelbar unter einem Drehgetriebe zum Antrieb des Bohrgerätes. In diese Werkzeugaufnahme werden die Bohrwerkzeuge, insbesondere Bohrschnecken, Bohreimer oder Bohrrohre, eingesetzt und nach dem Einsetzen verriegelt. Das Drehgetriebe ist oftmals ein Kraftdrehkopf (KDK), der das Druckrohr oder das Rohrgestänge oft aber auch beide Elemente antreibt.

Insbesondere bei der Herstellung von verrohrten Bohrungen mittels Drehbohranlagen ist ein stetiger Werkzeugwechsel vonnöten, zumindest im Hinblick auf die Bohrrohre, aber auch im Hinblick auf das Aushubwerkzeug (z.B. Bohrschnecken oder Bohreimer). Beim Eintreiben der Bohrrohre wird zunächst mit dem Aushubwerkzeug die Erde und das Gestein im Bohrloch aufgelockert und entfernt und währenddessen oder nach festgelegten Intervallen das Bohrrohr mit dem Druckrohr in dem Loch nach unten bewegt. Je nach Untergrund wird zusätzlich noch eine Verrohrungsmaschine verwendet.

Zum Entfernen des Aushubs aus dem Bohrloch ist es notwendig, das Bohrrohr vom Druckrohr zu lösen, die Kellystange mit dem Aushubwerkzeug herauszuziehen, den Aushub neben dem Bohrloch zu deponieren, das Aushubwerkzeug mit der Kellystange wieder in das Bohrrohr einzuführen und das Druckrohr wieder mit dem Bohrrohr zu verriegeln.
Je nach Untergrund muss zuweilen auch das Aushubwerkzeug an der Kellystange gewechselt und verriegelt werden. Wird ein neues Loch gegraben und verrohrt, muss die Drehbohranlage das Bohrrohr komplett anheben und zu dem Bohrloch befördern. Bohrrohre und Aushubwerkzeuge werden also bei dem Vorgang zeitweise frei an der Drehbohranlage hängend geführt.

Die Bohrwerkzeuge greifen beim Einsetzen meist formschlüssig in einen Bereich der Werkzeugaufnahme ein. Zur Verriegelung werden in der Regel Verriegelungsbolzen verwendet, die in Hülsen am Werkzeug oder der Werkzeugaufnahme angeordnet sind und per Hebel von Hand oder durch eine Hydraulik verschoben werden, um in Löcher des Gegenstücks einzugreifen und dieses damit zu verriegeln.

Nachteil des Standes der Technik ist, dass die bekannten Vorrichtungen vergleichsweise kompliziert und damit teuer sind und ihre Verwendung aufwändig ist, da die Steuerleitungen und -elemente durch das Drehgetriebe des Bohrgerätes in die sich drehende Werkzeugaufnahme geführt werden müssen. Zudem ist eine integrierte Überwachung der Verriegelung nur sehr schwer bis überhaupt nicht möglich, was eine Beeinträchtigung der Arbeitssicherheit zur Folge hat.

In EP 1 624 151 A2 wird eine Aufnahme für ein rohrförmiges Bohrwerkzeug beschrieben, die eine Verriegelungsvorrichtung mit einem radial angeordneten Verriegelungsbolzen aufweist. Der Verriegelungsbolzen ist in einer Hülse dreh- und verschiebbar angeordnet. Am Verriegelungsbolzen befindet sich ein radial nach außen weisender Zapfen oder Führungsstift, der in eine langlochartige Kulisse eingreift, welche schraubenförmig in der Hülse verläuft. Durch eine Drehbewegung des Verriegelungsbolzens um seine Längsachse wird dieser parallel zu dieser lateral verschoben. Die rotative Bewegung des Bolzens relativ zur Hülse wird durch ein Bewegungssystem bewirkt, z. B. unter Verwendung eines Elektromotors. Ein Lageüberwachungssystem zur Überwachung der Lage des Verriegelungsbolzens ist nicht vorgesehen.

Die Aufgabe der Erfindung besteht darin, die Nachteile des Standes der Technik zu überwinden und eine optimierte Verriegelung zur Verfügung zu stellen.

Die Aufgabe wird durch eine Verriegelungsvorrichtung und ein Verriegelungsverfahren nach den Ansprüchen gelöst.

Die erfindungsgemäße Verriegelungsvorrichtung für die Verriegelung eines Werkzeuges mit der Werkzeugaufnahme einer Drehbohranlage umfasst eine Hülse, einen Verriegelungsbolzen, ein Bewegungssystem und ein Steuersystem.

Die Form von Hülse und Verriegelungsbolzen ist weitgehend beliebig. Die Stücke müssen jedoch so geschaffen sein, dass die Hülse den Verriegelungsbolzen formschlüssig umfasst, sodass er sich in ihr um seine Längsachse drehen und dadurch parallel zu dieser Längsachse lateral verschieben lässt.

Verriegelungsbolzen und Hülse sind dermaßen ausgestaltet, dass der Vorschub des Verriegelungsbolzens relativ zur Hülse durch dessen Drehung in der Hülse erreicht wird. Dies geschieht bevorzugt dadurch, dass ein Element aus dem Verriegelungsbolzen herausragt und in einer spiraligen Ausnehmung der Hülse geführt wird oder ein Element aus der Hülse herausragt und in einer spiraligen Ausnehmung des Verriegelungsbolzens geführt wird.
Eine geeignete laterale Bewegung des Verriegelungsbolzens relativ zur Hülse im Falle des Verriegelungsvorganges ist insbesondere so ausgestaltet, dass der Verriegelungsbolzen aus einer Position, in der seine Vorderfläche innerhalb der Hülse liegt oder zumindest bündig mit dieser oder der Werkzeughalterung abschließt, in eine Position gebracht wird, in der er so weit aus der Hülse herausragt, dass er, insbesondere durch eine Ausnehmung in der Werkzeughalterung, in eine Ausnehmung im Werkzeug, insbesondere mindestens 1 cm weit, eingreifen kann.

Bevorzugt umfasst der Verriegelungsbolzen mindestens einen radial nach außen verlaufenden Führungsstift, der in einer Kulisse in der Hülse geführt ist, insbesondere in einer zur Hülsenlängsrichtung schräg bzw. in Form einer Spirale verlaufenden Kulisse, bevorzugt einer langlochartigen Ausnehmung der Hülse. Diese Kulisse kann eine Ausnehmung durch einen Teil der Wanddicke der Hülse oder die gesamte Wanddicke der Hülse darstellen.

In einer bevorzugten Ausführungsform ermöglicht die Kulisse eine Drehung eines Führungsstiftes, die nicht größer als 360°, vorzugsweise nicht größer als 180° ist.
In einer bevorzugten Ausführungsform ragt ein Endbereich des in der Kulisse geführten Führungsstifts über den Rand der Hülse hinaus. Dies ermöglicht eine sehr einfache Kontrolle der Position des Führungsstiftes visuell oder mittels Sensoren.

Das Bewegungssystem umfasst dabei mindestens einen Elektromotor und mindestens eine Welle, mit der es durch die Kraft des Elektromotors eine relative Verdrehung von Hülse und Verriegelungsbolzen bewirkt.

Bevorzugt weist das Bewegungssystem mindestens ein Getriebe auf, insbesondere mindestens ein Winkelgetriebe. Im Folgenden wird der übersicht halber nur noch ein Elektromotor und ein Getriebe genannt, was jedoch nicht zwingend als Einschränkung zu verstehen ist, jedoch eine bevorzugte Ausführungsform darstellt.
Das Getriebe wird dabei mittels der Drehbewegung des Elektromotors angetrieben und bewirkt die Drehung der Welle des Bewegungssystems, welche wiederum die relative Verdrehung von Hülse und Verriegelungsbolzen bewirkt. Der Vorteil eines Winkelgetriebes ist, dass die Verriegelungsvorrichtung damit platzsparend an der Werkzeugaufnahme angebracht werden kann.
Mindestens eine der Wellen des Bewegungssystems ist bevorzugt die Welle eines Elektromotors oder die Welle eines Getriebes.

Um die Drehung des Elektromotors schnell zu stoppen und/oder Drehungen im Ruhezustand zu verhindern, umfasst das Bewegungssystem bevorzugt mindestens eine Bremse.
Eine solche Bremse verhindert im gebremsten Zustand eine Drehung der Welle des Bewegungssystems, indem die Welle direkt, der Elektromotor, das Getriebe und/oder eine relative Drehung von Verriegelungsbolzen und Hülse blockiert wird/werden.

In einer bevorzugten Ausführungsform ist das Bewegungssystem fest mit der Hülse verbunden, bevorzugt mittels eines Adapters, sodass eine Drehung der Welle eine Drehung des Verriegelungsbolzens in der Hülse bewirkt, während das Bewegungssystem starr zur Hülse ausgerichtet bleibt. Wie oben bereits ausgeführt wurde, bedingt eine Drehung des Verriegelungsbolzens, dass dieser lateral in der Hülse verschoben wird. Durch eine Verschiebung kann er in Löcher des Werkzeugs oder der Werkzeugaufnahme eingreifen und somit seine verriegelnde Funktion ausüben.

In einer anderen bevorzugten Ausführungsform ist das Bewegungssystem fest mit dem Verriegelungsbolzen verbunden, bevorzugt mittels eines Adapters, sodass eine Drehung der Welle eine Drehung der Hülse um den Verriegelungsbolzen bewirkt, während das Bewegungssystem stets starr zum Verriegelungsbolzen ausgerichtet bleibt.

Zur Kompensation der lateralen Bewegung des Verriegelungsbolzens relativ zum Bewegungssystem umfasst die Verriegelungsvorrichtung bevorzugt zusätzliche Elemente zur Kompensation dieser Verschiebung relativ zur Welle des Bewegungssystems, insbesondere eine Schiebewelle, welche die Drehung der Welle an den Verriegelungsbolzen weitergibt, sich jedoch drehend zu der Welle verschieben lässt.

Das Steuersystem umfasst Einheiten zur Steuerung des Bewegungssystems, sodass insbesondere durch ein externes Ansteuersignal das Bewegungssystem den Verriegelungsbolzen in eine verriegelnde bzw. unverriegelnde Position bewegt. Ansteuersignale können durch eine drahtgebundene oder funkgebundene Übertragung an das Steuersystem erfolgen, welches ggf. über Einheiten zum Empfang von Funksignalen und/oder Einheiten zur Decodierung von Datensignalen verfügt. Eine Fernbedienung ist bevorzugt, da in diesem Falle keine Kabel zur Datenübertragung vom Führerstand der Drehbohranlage zur Verriegelungsvorrichtung führen müssen. Ansteuersignale können auch von einer zusätzlichen Sensoreinheit erfolgen, die automatisch feststellt, dass ein Werkzeug aufgenommen bzw. abgesetzt wurde, und das Steuersystem ohne Bedienung durch eine Person automatisch steuert.

Da sich die Werkzeugaufnahme bewegt, ist es bei einer drahtgebundenen Übertragung von großem Vorteil, wenn man an der Schnittstelle zu bewegten Teilen der Maschine die Signale auf den Drähten mittels Schleifkontakten überträgt.

In einer bevorzugten Ausführungsform umfasst die Verriegelungsvorrichtung, insbesondere das Steuersystem, einen Energiespeicher, insbesondere Batterien oder Akkumulatoren, welche genügend Energie für mindestens einen Ent- und/oder Verriegelungsvorgang liefert. Dies hat den Vorteil, dass keinerlei Zuführungen für Energie zu der Verriegelungsvorrichtung von der Energieversorgung der Drehbohranlage vorhanden sein müssen.

In einer weiteren bevorzugten Ausführungsform umfasst die Verriegelungsvorrichtung, ein System, mit dem aus der Drehung der Werkzeugaufnahme gegenüber unbewegten Teilen der Drehbohranlage Energie gewonnen werden kann. Bevorzugt weist das System zur Energiegewinnung mindestens einen Dynamo auf, dessen Stator vorzugsweise an der Werkzeugaufnahme angeordnet ist und dessen Rotator während der Drehung der Werkzeugaufnahme an unbewegten Teilen der Drehbohranlage entlanggeführt wird und sich dadurch relativ zum Stator drehen kann.
Diese Ausführungsform ist besonders wirkungsvoll, wenn sie den vorgenannten Energiespeicher aufweist, in dem Energie während des Bohrvorgangs gespeichert werden kann. Auf diese Weise kann während eines Bohrvorganges ausreichend Energie für die Ent- und Verriegelung beim nächsten Werkzeugwechsel gesammelt werden.

In einer bevorzugten Ausführungsform umfasst die Verriegelungsvorrichtung ein Lageüberwachungssystem, welches bevorzugt mindestens einen Sensor oder mindestens ein Paar Sensoren aufweist.
Dieses Lageüberwachungssystem ist dazu ausgelegt, die Lage des Verriegelungsbolzens zu überwachen, insbesondere dessen Endlage im verriegelten und/oder unverriegelten Zustand. Bevorzugte Sensoren sind solche aus der Gruppe Lichtschranken, elektrische Schalter, insbesondere Näherungsschalter, elektromechanische Schalter, insbesondere Taster, Potentiometer und elektrische Kontaktflächen.

Bei der Messung der Lage des Verriegelungsbolzens wird dessen Position bevorzugt direkt oder indirekt bestimmt. Dies kann insbesondere durch Messung der Position des Verriegelungsbolzens relativ zur Hülse geschehen, durch Messung der Position des Führungsstiftes oder durch Messung der Drehung einer Welle des Bewegungssystems, z.B. durch ein Potentiometer.
Bei der Messung der Position des Verriegelungsbolzens oder der Position des Führungsstiftes ist die Verwendung von Tastern und/oder Näherungsschaltern im Lageüberwachungssystem bevorzugt.

Das Lageüberwachungssystem wird bevorzugt dazu eingesetzt, das Bewegungssystem zu steuern, z.B. dass das Bewegungssystem so lange in Bewegung bleibt, bis eine Endlage erreicht wird, und/oder ein Alarmsystem betätigt wird, wenn sich das Werkzeug oder die Werkzeugaufnahme bewegt, ohne dass eine Verriegelung erfolgt ist. Das vorgenannte Alarmsystem ist insbesondere ein zusätzliches Teil der Verriegelungsvorrichtung.

Das Lageüberwachungssystem ermöglicht es, dass die erfindungsgemäße Verriegelungsvorrichtung entscheidend zur Arbeitssicherheit beiträgt. In der Praxis wird zuweilen eine erfolgte Verriegelung nur visuell kontrolliert, was zu menschlichen Fehlern führen kann. Auch wird manchmal aus Gründen der Zeitersparnis auf eine Verriegelung ganz verzichtet und der Formschluss zwischen Werkzeug und Werkzeugaufnahme zusammen mit dem Druck beim Bohren ausgenutzt. Da jedoch bei Drehbohrverfahren die Werkzeuge (Drehrohre und Aushubwerkzeuge) oft frei hängend bewegt werden, kann es zu Unfällen durch herabfallende Werkzeuge kommen, wenn diese nicht ordnungsgemäß verriegelt sind. Die vorliegende Erfindung mit einem Lageüberwachungssystem kann sicher bewerkstelligen, dass eine ordnungsgemäße Verriegelung detektiert und angezeigt werden kann. Bevorzugt umfasst dazu die Verriegelungsvorrichtung Anzeigeelemente und/oder Alarmelemente. Es ist ebenfalls bevorzugt, dass bei einer unsachgemäßen Verriegelung ein Signal an die Drehbohranlage übermittelt wird (per Funk oder drahtgebunden), das eine Bewegung des Werkzeugs so lange verhindert, bis eine ordnungsgemäße Verriegelung erfolgt ist.

Bei einer bevorzugten Ausführungsform ist die Werkzeugaufnahme das Druckrohr eines Drehbohrgerätes, welches insbesondere zur Aufnahme von Bohrrohren ausgelegt ist. An diesem Druckrohr sind bevorzugt mindestens zwei, insbesondere drei, vier oder fünf, erfindungsgemäße Verriegelungsvorrichtungen angebracht.
Eine erfindungsgemäße Verriegelungsvorrichtung ist dabei bevorzugt so angebracht, dass ihr Verriegelungsbolzen durch die Mantelwandung des Druckrohres hindurch ein Werkzeug, insbesondere ein Bohrrohr, verriegeln kann. Dies ist insbesondere dadurch realisiert, dass in der Mantelwandung Ausnehmungen an den entsprechenden Stellen vorhanden sind oder die Vorrichtung einen Teil der Mantelwandung bildet. In der Regel befinden sich die Stellen, an denen die Verriegelungsbolzen angeordnet sind, am unteren Endbereich der Mantelwandung eines eingebauten Druckrohrs.
Bei dieser Ausführungsform ist die erfindungsgemäße Verriegelungsvorrichtung somit speziell zur Verriegelung von Werkzeugen, insbesondere Bohrrohren, an einem Druckrohr ausgelegt.

Bei einer anderen bevorzugten Ausführungsform, die durchaus mit der vorangehend beschriebenen kombiniert werden kann, ist die Werkzeugaufnahme am Endbereich der Kellystange eines Drehbohrgeräts angebracht oder stellt diesen Endbereich dar. Die dafür ausgelegten Werkzeuge sind insbesondere Aushubwerkzeuge, bevorzugt Bohrschnecken oder Bohreimer. Bei dieser Ausführungsform ist die erfindungsgemäße Verriegelungsvorrichtung somit speziell zur Verriegelung von Werkzeugen, insbesondere Aushubwerkzeugen wie z.B. Bohrschnecken oder Bohreimern, an einer Kellystange ausgelegt.

Bei einer bevorzugten Ausführungsform sind die Verriegelungsbolzen und/oder die Hülse handelsübliche Elemente, die mit den übrigen Elementen der erfindungsgemäßen Vorrichtung ausgerüstet worden sind und damit die erfindungsgemäße Verriegelungsvorrichtung bilden.

Ein erfindungsgemäßes Verriegelungsverfahren für die Verriegelung eines Werkzeugs mit einer Werkzeugaufnahme einer Drehbohranlage umfassend mindestens eine Verriegelungsvorrichtung basiert auf den Schritten:
- In Verbindung bringen des Werkzeugs mit der Werkzeugaufnahme,
- Drehung mindestens eines Verriegelungsbolzens relativ zu der diesem Verriegelungsbolzen zugeordneten Hülse mittels mindestens eines Elektromotors.
Dadurch wird der Verriegelungsbolzen aus der Hülse hervortreten und das Werkzeug mit der Werkzeugaufnahme verklemmen oder in Löcher des Werkzeugs und/oder der Werkzeugaufnahme eingreifen und die beiden Teile auf diese Weise miteinander verriegeln.

Auch wenn der Übersicht halber wichtige Teile der Erfindung im Singular genannt werden, schließt dies nicht aus, dass all diese genannten Teile auch mehrfach in der Vorrichtung vorkommen können. So können z.B. mehrere Elektromotoren auf ein einziges Getriebe wirken oder mehrere Getriebe von einem einzigen Elektromotor angetrieben werden. Auch kann ein Verriegelungsbolzen mehrere Führungsstifte aufweisen oder Hülsen auch mehrere Kulissen.

Beispiele bevorzugter Ausführungsformen der Verriegelungsvorrichtung sind in den Abbildungen dargestellt.
Figur 1 zeigt schematisch die Position bevorzugter Ausführungsformen an einer Werkzeugaufnahme
Figur 2 zeigt schematisch eine bevorzugte Ausführungsform im unverriegelten Zustand von der Seite.
Figur 3 zeigt schematisch eine bevorzugte Ausführungsform im unverriegelten Zustand von hinten.
Figur 4 zeigt schematisch eine bevorzugte Ausführungsform im verriegelten Zustand von der Seite.
Figur 5 zeigt schematisch eine bevorzugte Ausführungsform im verriegelten Zustand von hinten.

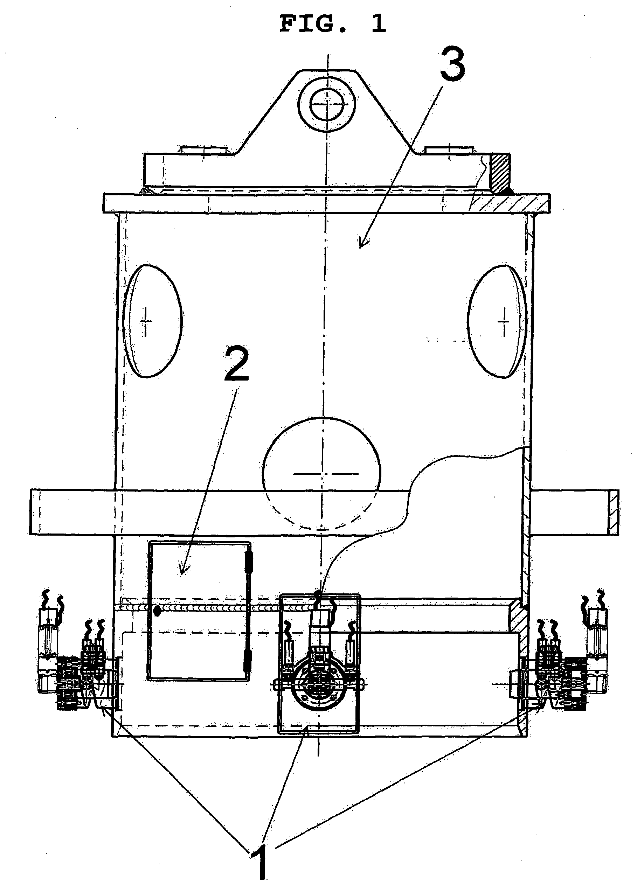

In Figur 1 sind die Positionen dreier Verriegelungsvorrichtungen 1 in einer Werkzeugaufnahme 3 einer Drehbohranlage dargestellt. Die Werkzeugaufnahme 3 kann dabei beispielsweise das Automatik Druckrohr einer mobilen Drehbohranlage sein. An dem oberen Ende der Werkzeugaufnahme 3 kann beispielsweise eine Drehvorrichtung der Drehbohranlage angebracht sein. Das untere Ende der Werkzeugaufnahme 3 ist zur Verbindung mit nicht dargestellten Werkzeugen ausgelegt. In die Werkzeugaufnahme 3 können beispielsweise Bohrrohre zum Bohren von Bohrpfählen oder zum Herstellen von verrohrten Bohrungen eingesetzt und mittels der Verriegelungsvorrichtungen 1 verriegelt werden. Mittels Verriegelungsbolzen werden Werkzeuge verriegelt, indem diese durch Durchtrittsöffnungen des Bohrrohres durchgreifen und so das Werkzeug sichern. Über ein Steuersystem 2 kann die Ver- bzw. Entriegelung des betreffenden Werkzeuges gesteuert werden. In dem Fall, dass das Steuersystem einen Funkempfänger und eine eigene Energiequelle aufweist, z.B. einen Akkumulator, müssten keine Kabel von außen zu der sich drehenden Werkzeugaufnahme geführt werden, was den Vorteil hat, dass das System preiswert, einfach zu installieren und einfach zu warten ist.

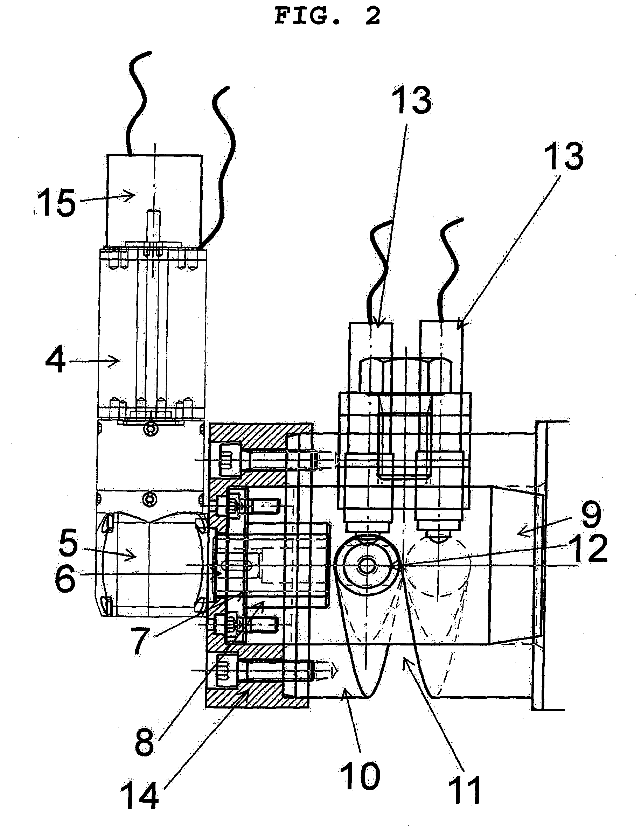

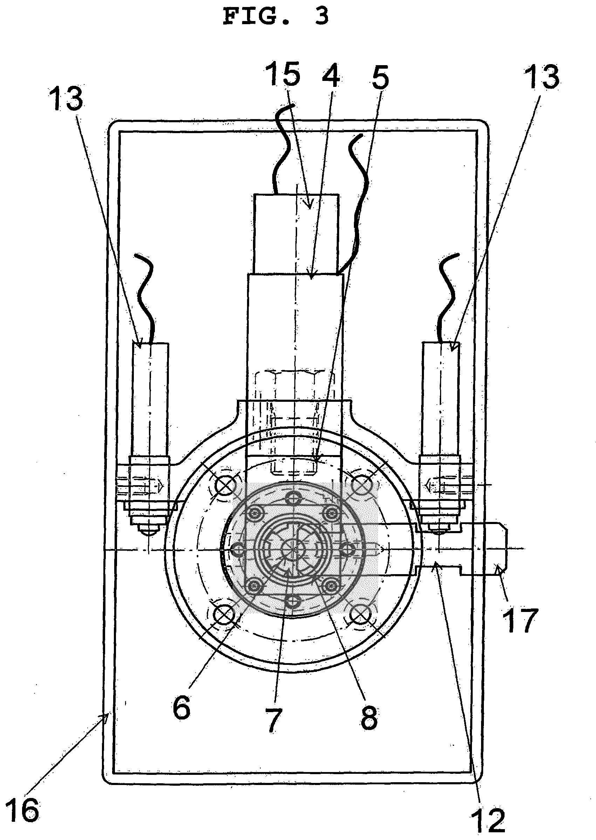

In den Figuren 2 und 3 ist eine bevorzugte Ausführungsform im unverriegelten Zustand von der Seite und von hinten dargestellt. Deutlich ist zu erkennen, wie ein Elektromotor 4 über ein Getriebe 5, welches hier ein Winkelgetriebe ist, die Drehung des Verriegelungsbolzens 9 in einer Hülse 10 bedingt. Der Verriegelungsbolzen 9 ist in der Hülse 10 verschiebbar und drehbar gelagert und weist einen radial nach außen ragenden Führungsstift 12 auf, wobei der Führungsstift 12 in einer schräg zur Hülsenlängsrichtung verlaufenden, langlochartigen Ausnehmung der Hülse geführt ist.
Die Drehung des Elektromotors 4 überträgt sich über das Getriebe 5 auf die Getriebewelle 6, welche ihrerseits ihre Drehung auf eine Schiebewelle 7 überträgt. Die Schiebewelle 7 ist mit dem Verriegelungsbolzen 9 verbunden und kompensiert dessen laterale Bewegung relativ zur Getriebewelle 6. Zur Optimierung der Bewegung des Verriegelungsbolzens 9 kann dieser mittels einer zusätzlichen Axialführung 8 geführt werden.
Die Drehung des Verriegelungsbolzens 9 bewirkt, dass dessen Führungsstift 12 in der langlochartigen Kulissenführung 11 der Hülse 10 schraubenförmig geführt wird. diese Schraubenbewegung drückt den Verriegelungsbolzen 9 aus der Hülse 10 (in der Zeichnung nach rechts), sodass er nach Abschluss dieser Bewegung aus der Hülse herausragt und ein Werkzeug auf diese Weise mit der Werkzeugaufnahme verriegeln würde.
Zwei Elemente zur Lageüberwachung, die Sensoren 13, überwachen die Position des Verriegelungsbolzens 9 über die Position des Führungsstiftes 12. Im dargestellten unverriegelten Zustand ist der Führungsbolzen dermaßen ausgerichtet, dass der Sensor 13, der die unverriegelte Position überwacht (linker Sensor in Fig. 2, rechter Sensor in Fig. 3), ausgelöst wird. Für den Fall, dass sich die Verriegelungsvorrichtung zu ihrem Schutz in einem Gehäuse 16 befindet, wie in Fig. 3 dargestellt wird, ist eine Führungsstiftverlängerung 17 hilfreich, welche diesen zumindest an dessen Endpositionen aus dem Gehäuse ragen lässt und eine zusätzliche visuelle Überprüfung ermöglicht. Die Verriegelungsvorrichtung kann über einen Adapter 14 mit der Hülse oder der Werkzeugaufnahme verbunden werden. Eine Bremse 15 ermöglicht ein Blockieren der Verriegelungsvorrichtung, sodass keine manuelle oder selbsttätige Verstellung möglich ist.

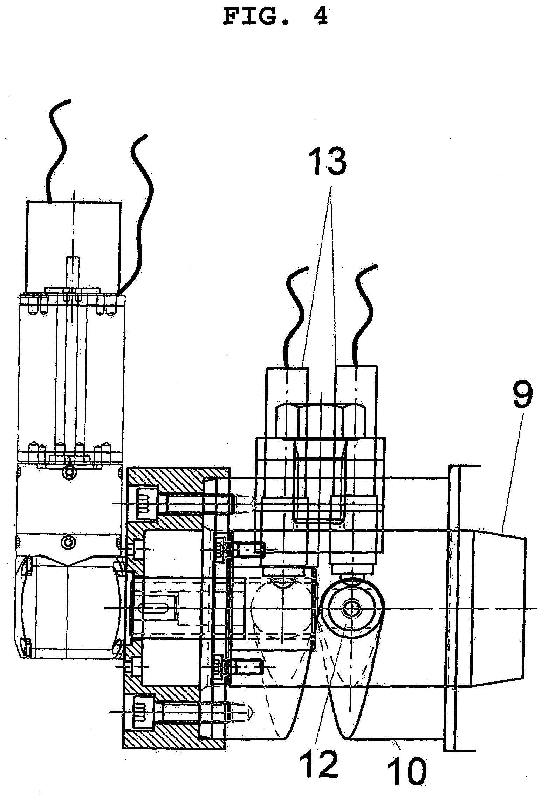

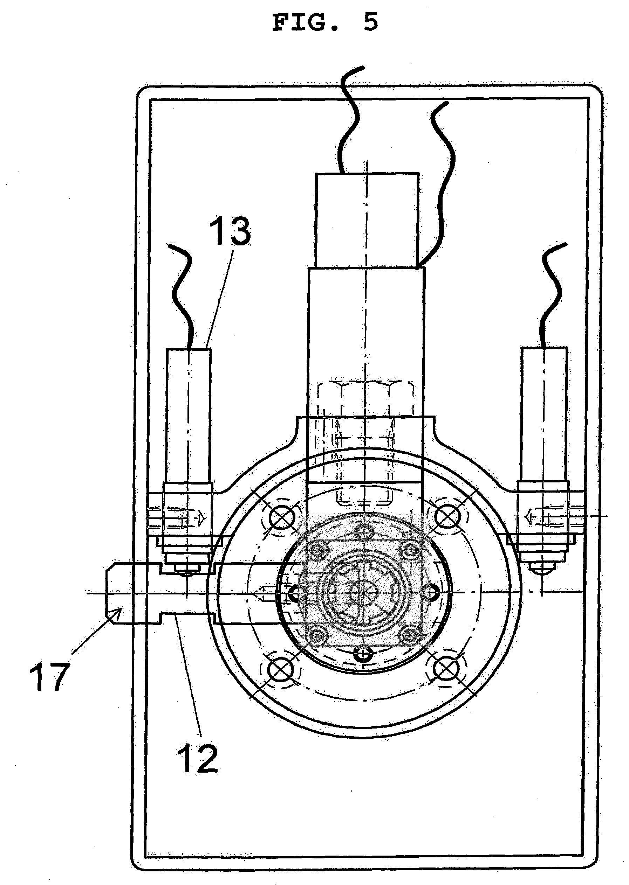

Figuren 4 und 5 zeigen eine bevorzugte Ausführungsform im verriegelten Zustand von der Seite und von hinten. Im Vergleich zu den Figuren 2 und 3 befindet sich nun der Verriegelungsbolzen 9 im ausgefahrenen Zustand (Zustand der Verriegelung). Im dargestellten verriegelten Zustand ist der Führungsbolzen dermaßen ausgerichtet, dass der Sensor 13, der die verriegelte Position überwacht (rechter Sensor in Fig. 2, linker Sensor in Fig. 3), ausgelöst wird.

### Bezugszeichenliste:

- 1:: Verriegelungsvorrichtung
- 2:: Steuersystem
- 3:: Werkzeugaufnahme
- 4:: Elektromotor
- 5:: Getriebe
- 6:: Getriebewelle
- 7:: Schiebewelle
- 8:: Axialführung
- 9:: Verriegelungsbolzen
- 10:: Hülse
- 11:: Kulissenführung
- 12:: Führungsstift
- 13:: Endlageüberwachung
- 14:: Adapter
- 15:: Bremse
- 16:: Gehäuse
- 17:: Führungsstiftverlängerung

## Patentansprüche

1. Verriegelungsvorrichtung (1) für die Verriegelung eines Werkzeuges mit der Werkzeugaufnahme (3) einer Drehbohranlage umfassend eine Hülse (10), einen Verriegelungsbolzen (9), ein Bewegungssystem und ein Steuersystem (2), wobei die Hülse (10) und der Verriegelungsbolzen (9) so geschaffen sind, dass die Hülse (10) den Verriegelungsbolzen (9) formschlüssig umfasst, sodass er sich in ihr um seine Längsachse drehen und dadurch parallel zu dieser Längsachse lateral verschieben lässt, wobei der Verriegelungsbolzen (9) mindestens einen radial nach außen verlaufenden Führungsstift (12) umfasst, der in einer Kulisse in der Hülse (10) geführt ist; und wobei das Bewegungssystem mindestens einen Elektromotor (4) und mindestens eine Welle aufweist, wobei die Welle durch die Kraft des Elektromotors (4) eine relative Verdrehung von Hülse (10) und Verriegelungsbolzen (9) bewirkt, **dadurch gekennzeichnet, dass** die Verriegelungsvorrichtung (1) ein Lageüberwachungssystem umfasst, welches dazu ausgelegt ist, die Lage des Verriegelungsbolzens (9) zu überwachen, und dass die Verriegelungsvorrichtung (1) dazu ausgelegt ist, bei der Messung der Lage des Verriegelungsbolzens (9) dessen Position durch Messung der Position des Führungsstiftes (12) zu bestimmen.

2. Verriegelungsvorrichtung (1) nach Anspruch 1, **dadurch gekennzeichnet, dass** der Führungsstift (12) in einer zur Hülsenlängsrichtung schräg bzw. in Form einer Spirale verlaufenden, langlochartigen Ausnehmung der Hülse (10) geführt ist, wobei die Kulisse so ausgelegt ist, dass sie eine Drehung eines Führungsstiftes (12) erlaubt, die nicht größer als 360°, vorzugsweise nicht größer als 180° ist.

3. Verriegelungsvorrichtung (1) nach einem der vorangehenden Ansprüche, **dadurch gekennzeichnet, dass** das Bewegungssystem mindestens ein Getriebe (5) aufweist, insbesondere mindestens ein Winkelgetriebe, wobei das mindestens eine Getriebe (5) durch die Drehbewegung des mindestens einen Elektromotors (4) angetrieben wird und die Drehung der Welle des Bewegungssystems bewirkt.

4. Verriegelungsvorrichtung (1) nach einem der vorangehenden Ansprüche, **dadurch gekennzeichnet, dass** das Bewegungssystem mindestens eine Bremse (15) zur Verhinderung einer Drehung der Welle des Bewegungssystems umfasst, bevorzugt eine Bremse (15) wirkend auf die Welle direkt, auf den Elektromotor (4), auf das Getriebe (5) und/oder auf eine relative Drehung von Verriegelungsbolzen (9) und Hülse (10).

5. Verriegelungsvorrichtung (1) nach einem der vorangehenden Ansprüche, **dadurch gekennzeichnet, dass** das Bewegungssystem fest mit der Hülse (10) verbunden ist, bevorzugt mittels eines Adapters (14), sodass eine Drehung der Welle eine Drehung des Verriegelungsbolzens (9) in der Hülse (10) bewirkt, während das Bewegungssystem starr zur Hülse (10) ausgerichtet bleibt.

6. Verriegelungsvorrichtung (1) nach einem der vorangehenden Ansprüche, **dadurch gekennzeichnet, dass** das Steuersystem (2) Einheiten zur Steuerung des Bewegungssystems umfasst, sodass insbesondere durch ein externes Ansteuersignal das Bewegungssystem den Verriegelungsbolzen (9) in eine verriegelnde bzw. unverriegelnde Position bewegt.

7. Verriegelungsvorrichtung (1) nach einem der vorangehenden Ansprüche, **dadurch gekennzeichnet, dass** die Verriegelungsvorrichtung (1), insbesondere das Steuersystem (2), einen Energiespeicher, insbesondere Batterien oder Akkumulatoren, umfasst, welcher genügend Energie für mindestens einen Ent- und/oder Verriegelungsvorgang liefert, und dass die Verriegelungsvorrichtung (1) bevorzugt ein System umfasst, mit dem aus der Drehung der Werkzeugaufnahme (3) gegenüber unbewegten Teilen der Drehbohranlage Energie gewonnen werden kann.

8. Verriegelungsvorrichtung (1) nach einem der vorangehenden Ansprüche, **dadurch gekennzeichnet, dass** die Verriegelungsvorrichtung (1) dermaßen gestaltet ist, dass ein Endbereich des in der Kulisse geführten Führungsstifts (12) über den Rand der Hülse (10) hinausragt oder dass das Lageüberwachungssystem mindestens einen Sensor oder mindestens ein Paar Sensoren aufweist, und dazu ausgelegt ist, insbesondere die Endlage des Verriegelungsbolzens (9) im verriegelten und/oder unverriegelten Zustand zu überwachen.

9. Verriegelungsverfahren für die Verriegelung eines Werkzeugs mit einer Werkzeugaufnahme (3) einer Drehbohranlage umfassend mindestens eine Verriegelungsvorrichtung (1) nach den vorangehenden Ansprüchen, **gekennzeichnet durch** die Schritte:
- In Verbindung bringen des Werkzeugs mit der Werkzeugaufnahme (3),
- Drehung mindestens eines Verriegelungsbolzens (9) relativ zu der diesem Verriegelungsbolzen (9) zugeordneten Hülse (10) mittels mindestens eines Elektromotors (4).

10. Verfahren nach Anspruch 9, **dadurch gekennzeichnet, dass** ein Lageüberwachungssystem dazu eingesetzt wird, das Bewegungssystem zu steuern, insbesondere dass das Bewegungssystem so lange in Bewegung bleibt, bis eine Endlage erreicht wird, und/oder ein Alarmsystem betätigt wird, wenn sich das Werkzeug oder die Werkzeugaufnahme (3) bewegt, ohne dass eine Verriegelung erfolgt ist.

## Claims

1. A locking device (1) for locking a tool to the tool holder (3) of a rotary drilling rig, comprising a sleeve (10), a locking pin (9), a movement system and a control system (2), said sleeve (10) and said locking pin (9) being configured such that the sleeve (10) engages around the locking pin (9) with positive locking such that the locking pin (9) can rotate in the sleeve (10) about the longitudinal axis of said locking pin (9) and, as a result, can be displaced laterally, parallelly to said longitudinal axis, with said locking pin (9) comprising at least one radially outwardly extending guide pin (12) which is guided in a slide in the sleeve (10), and with said movement system having at least one electric motor (4) and at least one shaft, wherein the shaft effects a relative rotation of sleeve (10) and locking pin (9) by means of the force of the electric motor (4), **characterized in that** the locking device (1) comprises a position monitoring system which is designed to monitor the position of the locking pin (9), and **in that** the locking device (1) is designed such that when measuring the position of the locking pin (9), the position of the locking pin (9) is determined by measuring the position of the guide pin (12).

2. The locking device (1) according to claim 1, **characterized in that** the guide pin (12) is guided in a slot-like recess of the sleeve (10), which slot-like recess extends obliquely, or helically, to the longitudinal direction of the sleeve (10), with the said slide being designed such that it allows a rotation of a guide pin (12) which is not greater than 360°, preferably not greater than 180°.

3. The locking device (1) according to any one of the preceding claims, **characterized in that** the movement system has at least one gear unit (5), in particular at least one angular gear, wherein said at least one gear unit (5) is driven by the rotary movement of the at least one electric motor (4) and causes the rotation of the shaft of the movement system.

4. The locking device (1) according to any one of the preceding claims, **characterized in that** the movement system comprises at least one brake (15) for preventing rotation of the shaft of the movement system, preferably a brake (15) acting on the shaft directly, on the electric motor (4), on the gear unit (5) and/or on a relative rotation of locking pin (9) and sleeve (10).

5. The locking device (1) according to any one of the preceding claims, **characterized in that** the movement system is firmly connected to the sleeve (10), preferably by means of an adapter (14), so that rotation of the shaft causes rotation of the locking pin (9) in the sleeve (10), while the movement system remains rigidly aligned with the sleeve (10).

6. The locking device (1) according to any one of the preceding claims, **characterized in that** the control system (2) comprises units for controlling the movement system, so that, in particular by an external drive signal, the movement system moves the locking pin (9) into a locking or non-locking position.

7. The locking device (1) according to any one of the preceding claims, **characterized in that** the locking device (1), in particular the control system (2), comprises an energy storage device, particularly batteries or accumulators, which supplies enough energy for at least one unlocking and/or locking operation, and that the locking device (1) preferably comprises a system that allows for energy to be won from the rotation of the tool holder (3) relative to non-moving parts of the drilling rig.

8. The locking device (1) according to any one of the preceding claims, **characterized in that** the locking device (1) is designed such that an end portion of the guide pin (12), which guide pin is guided in said slide, protrudes over the edge of the sleeve (10), or such that said position monitoring system comprises at least one sensor or at least one pair of sensors and is designed to monitor, in particular, the end position of the locking pin (9) in the locked and/or unlocked state.

9. A locking method for locking a tool to a tool holder (3) of a rotary drilling rig comprising at least one locking device (1) according to the preceding claims, **characterized by** the steps of:
- connecting the tool to the tool holder (3);
- turning at least one locking pin (9) relative to the sleeve (10) associated to said locking pin (9), by means of at least one electric motor (4).

10. The method according to claim 9, **characterized in that** a position monitoring system is used to control the movement system, more particularly that the movement system remains in motion until a final position is reached, and/or that an alarm system is actuated when the tool or the tool holder (3) moves without a locking having been effected.

## Revendications

1. Dispositif de verrouillage (1) pour le verrouillage d'un outil avec le logement d'outil (3) d'une installation de forage rotatif, comprenant une douille (10), un axe de verrouillage (9), un système de déplacement et un système de commande (2), dans lequel la douille (10) et l'axe de verrouillage (9) sont agencés de sorte que la douille (10) entoure l'axe de verrouillage (9) par complémentarité de forme, de sorte qu'il puisse tourner sur lui-même autour de son axe longitudinal et être ainsi décalé de manière latérale parallèlement audit axe longitudinal, dans lequel l'axe de verrouillage (9) comprend au moins une tige de guidage (12) s'étendant radialement vers l'extérieur et qui est guidée dans une coulisse au sein de la douille (10) ; et dans lequel le système de déplacement présente au moins un moteur électrique (4) et au moins un arbre, dans lequel l'arbre provoque une rotation relative de la douille (10) et de l'axe de verrouillage (9) grâce à la force du moteur électrique (4), **caractérisé en ce que**
le dispositif de verrouillage (1) comprend un système de surveillance de position qui est conçu pour surveiller la position de l'axe de verrouillage (9), et le dispositif de verrouillage (1) est conçu pour déterminer le positionnement de l'axe de verrouillage (9) grâce à une mesure du positionnement de la tige de guidage (12) lors de la mesure de la position dudit axe.

2. Dispositif de verrouillage (1) selon la revendication 1, **caractérisé en ce que** la tige de guidage (12) est guidée dans un évidement, de type trou allongé, de la douille (10), s'étendant de manière diagonale, resp. sous la forme d'une spirale, par rapport à la direction longitudinale de douille, dans lequel la coulisse est conçue pour permettre une rotation d'une tige de guidage (12) sur moins de 360°, de manière préférée sur moins de 180°.

3. Dispositif de verrouillage (1) selon l'une quelconque des revendications précédentes, **caractérisé en ce que** le système de déplacement présente au moins un engrenage (5), en particulier au moins un engrenage angulaire, dans lequel le au moins un engrenage (5) est entraîné par le mouvement rotatif du au moins un moteur électrique (4) et provoque la rotation de l'arbre du système de déplacement.

4. Dispositif de verrouillage (1) selon l'une quelconque des revendications précédentes, **caractérisé en ce que** le système de déplacement comporte au moins un frein (15) destiné à empêcher une rotation de l'arbre du système de déplacement, de manière préférée un frein (15) agissant directement sur l'arbre, sur le moteur électrique (4), sur l'engrenage (5) et/ou sur une rotation relative de l'axe de verrouillage (9) et de la douille (10).

5. Dispositif de verrouillage (1) selon l'une quelconque des revendications précédentes, **caractérisé en ce que** le système de déplacement est relié fixe à la douille (10), de manière préférée au moyen d'un adaptateur (14), de sorte qu'une rotation de l'arbre provoque une rotation de l'axe de verrouillage (9) au sein de la douille (10), pendant que le système de déplacement reste aligné immobile par rapport à la douille (10).

6. Dispositif de verrouillage (1) selon l'une quelconque des revendications précédentes, **caractérisé en ce que** le système de commande (2) comprend des unités destinées à une commande du système de déplacement, de sorte que le système de déplacement déplace l'axe de verrouillage (9) dans un positionnement verrouillé resp. déverrouillé en particulier grâce à un signal de pilotage externe.

7. Dispositif de verrouillage (1) selon l'une quelconque des revendications précédentes, **caractérisé en ce que** le dispositif de verrouillage (1) comprend en particulier le système de commande (2), un dispositif de stockage d'énergie, en particulier des batteries ou des accumulateurs, qui délivrent suffisamment d'énergie pour au moins une action de déverrouillage et/ou de verrouillage, et le dispositif de verrouillage (1) comprend de manière préférée un système avec lequel de l'énergie peut être obtenue à partir de la rotation du logement d'outil (3) par rapport à des pièces non déplacées de l'installation de forage rotatif.

8. Dispositif de verrouillage (1) selon l'une quelconque des revendications précédentes, **caractérisé en ce que** le dispositif de verrouillage (1) est conçu de telle manière qu'une région d'extrémité de la tige de guidage (12) guidée dans la coulisse fait saillie par-dessus le bord de la douille (10) ou que le système de surveillance de position présente au moins un capteur ou au moins une paire de capteurs, et est conçu pour surveiller en particulier la position finale de l'axe de verrouillage (9) à l'état verrouillé et/ou déverrouillé.

9. Procédé de verrouillage pour le verrouillage d'un outil avec un logement d'outil (3) d'une installation de forage rotatif comprenant au moins un dispositif de verrouillage (1) selon l'une quelconque des revendications précédentes, **caractérisé par** les étapes consistant à :
- mettre en relation l'outil et avec logement d'outil (3),
- faire tourner au moins un axe de verrouillage (9) par rapport à la douille (10) associée audit axe de verrouillage (9) au moyen d'au moins un moteur électrique (4).

10. Procédé selon la revendication 9, **caractérisé en ce qu'**un système de surveillance de position est utilisé pour commander le système de déplacement, en particulier **caractérisé en ce que** le système de déplacement reste en mouvement jusqu'à ce qu'une position finale soit atteinte, et/ou un système d'alarme est actionné lorsque l'outil ou le logement d'outil (3) est en mouvement sans qu'un verrouillage n'ait lieu.
